# EUROPÄISCHE PATENTSCHRIFT

(11) **EP 0 422 146 B1**
(45) Veröffentlichungstag und Bekanntmachung des Hinweises auf die Patenterteilung: **17.03.1993**
(21) Anmeldenummer: 90904823.3
(22) Anmeldetag: 24.03.1990
(51) Int. Cl.: B60T 13/575

(54) **BREMSKRAFTVERSTÄRKER, INSBESONDERE FÜR KRAFTFAHRZEUGE**
BRAKE BOOSTER, IN PARTICULAR FOR MOTOR VEHICLES
SERVOFREIN, NOTAMMENT POUR VEHICLES A MOTEUR

(30) Priorität: 25.04.1989 DE 3913536
(43) Veröffentlichungstag der Anmeldung: 17.04.1991
(73) Patentinhaber: ALFRED TEVES GmbH, 60441 Frankfurt (DE)
(72) Erfinder: BAUER, Jürgen, D-6200 Wiesbaden (DE)
(86) Internationale Anmeldenummer: EP9000480
(87) Internationale Veröffentlichungsnummer: WO9012716

(56) Entgegenhaltungen:
- DE-A- 3 113 271
- DE-A- 3 232 664
- DE-A- 3 505 626
- DE-A- 3 709 172

## Beschreibung

Die Erfindung betrifft einen Bremskraftverstärker, insbesondere für Kraftfahrzeuge mit einem Verstärkergehäuse, das durch mindestens eine axial bewegliche Wand in mindestens eine Vakuumkammer und mindestens eine Arbeitskammer dichtend unterteilt ist, mit einer in der hauptzylinderseitigen Vakuumkammer angeordneten Rückstellfeder und mit einem mechanisch betätigbaren Steuerventil zur Verbindung der Arbeitskammer mit der Vakuumkammer bzw. mit der Atmosphäre, dessen Steuerventilgehäuse mit der beweglichen Wand fest verbunden ist, wobei eine gummielastische Reaktionsscheibe, die an einem Kopfflansch einer Druckstange anliegt, die die Bremskraft auf einen Betätigungskolben eines unterdruckseitig am Verstärkergehäuse angebrachten Hauptzylinders überträgt, in einem topfförmigen Einlegeteil angeordnet ist, das sich in einer Ausnehmung des Steuerventilgehäuses befindet, dessen Wände sich hauptzylinderseitig über den Kopfflansch hinaus erstrecken und dessen Boden dem Steuerventilgehäuse zugewandt ist.

Gattungsgemäße Bremskraftverstärker mit Sicherungen gegen Herausfallen der Druckstange sind in den verschiedensten Ausführungen bekannt, beispielsweise aus der älteren Anmeldung der Anmelderin DE-OS 37 09 172.7. Es gibt Krallringe, durch Ultraschweißen oder Ankleben befestigte Kunststoffringe oder eingescherte Metallringe als Sicherungen. Stets ist jedoch mindestens ein zusätzliches Teil zu befestigen. Dies ist teuer und montageaufwendig.

Es ist daher Aufgabe der Erfindung, einen Bremskraftverstärker vorzuschlagen, bei dem die Druckstange auf einfache, kostengünstig herzustellende Art gegen Herausfallen gesichert ist, wobei insbesondere die Möglichkeit einer teilautomatisierten Produktion und die besondere Montageproblematik bei in den Bremskraftverstärker integriertem Hauptzylinder durch Vormontage einzelner Bauteilgruppen berücksichtigt ist.

Die Aufgabe wird durch die kennzeichnenden Merkmale des Anspruchs 1 gelöst. Das topfförmige Einlegeteil nimmt die Reaktionsscheibe auf und weist formschlüssige Haltevorrichtungen auf, um die Druckstange am Herausfallen zu hindern. Außerdem wird es durch eine in der Druckkammer angeordnete Rückstellfeder gehaltert. Durch diese Maßnahme ist eine Vormontage von Druckstange, Reaktionsscheibe und Einlegeteil außerhalb des Verstärkers und damit auch eine automatisierte Produktion möglich.

In vorteilhafter Weise werden an das Einlegeteil hauptzylinderseitig mehrere Laschen gemäß Anspruch 2 angeformt, die als Abstützfläche für die Rückstellfeder dienen. Durch diese einfache Maßnahme kann das Einlegeteil ohne andere aufwendige Befestigungen gehaltert werden. Auch die Montage gestaltet sich denkbar einfach.

Gemäß den Ansprüchen 3 bis 5 dienen Haltenasen, Eindrückungen oder Einscherunger., die hautpzylinderseitig am Einlegeteil angebracht sind, zur formschlüssigen Halterung der Druckstange.

Eine besonders kostengünstige Ausfürungsform der Erfindung sieht vor, das Einlegeteil gemäß Anspruch 6 als Blechpreßteil auszuführen.

Mögliche Ausführungsformen der Erfindung werden anhand der beiliegenden Zeichnungen erläutert. Es zeigen
Fig. 1 einen axialen Schnitt durch einen Bremskraftverstärker in Tandemausführung mit topfförmigem Einlegeteil,
Fig. 2 einen axialen Schnitt durch eine weitere Ausführungsform des Einlegeteils sowie die Reaktionsscheibe und die Druckstange,
Fig. 3 eine dritte Variante des Einlegeteils in Draufsicht und
Fig. 4 die in Fig. 3 gezeigte Variante des Einlegeteils im Schnitt entlang der dort markierten Linie.

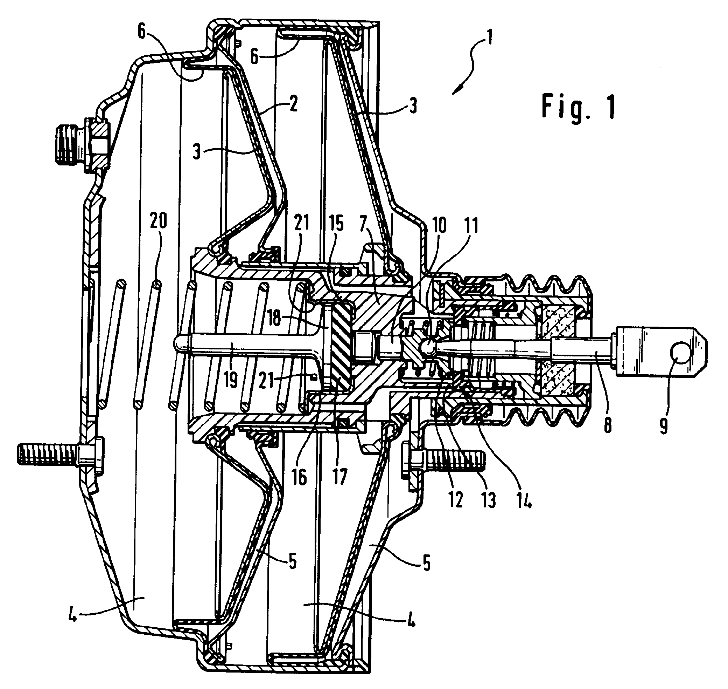

Man erkennt in Fig. 1 das Verstärkergehäuse 1, das von einer festen Wand 2 und zwei beweglichen Wänden 3 in zwei Vakuumkammern 4 und zwei Arbeitskammern 5 unterteilt ist. Jede bewegliche Wand 3 ist durch eine Rollmembran 6 gegenüber dem Verstärkergehäuse 1 abgedichtet. In das Verstärkergehäuse 1 ragt ein rohrförmiges Steuerventilgehäuse 7, welches axial von einer Kolbenstange 8 durchdrungen wird. Das eine Ende der Kolbenstange 8 wird von einer Öse 9 zum Anlenken des nicht dargestellten Betätigungspedals und das andere Ende von einem in einen Ventilkolben 10 hineinragenden Kugelkopf 11 gebildet. Der Ventilkolben 10 weist einen Ventilsitz 12 auf, der mit einem zweiten Ventilsitz 13 und dem Tellerventil 14 zusammenwirkt. Durch das Tellerventil 14 und die beiden Ventilsitze 12, 13 ist der Druck in den Arbeitskammern 5 regelbar. Im Steuerventilgehäuse 7 befindet sich eine Ausnehmung 15, in die das topfförmige Einlegeteil 16 eingesetzt ist. Es nimmt die Reaktionsscheibe 17 und den Kopfflansch 18 einer Druckstange 19 auf, die die pneumatisch verstärkte Bremskraft auf einen nicht dargestellten Hauptzylinder überträgt. Das Einlegeteil 16 wird durch eine in der hauptzylinderseitigen Vakuumkammer 4 angeordnete Rückstellfeder 20 gehaltert und gegen das Steuerventilgehäuse 7 gepreßt. Am Einlegeteil 16 sind Eindrückungen 21 angebracht, die die Druckstange 19 gegen Herausfallen sichern.

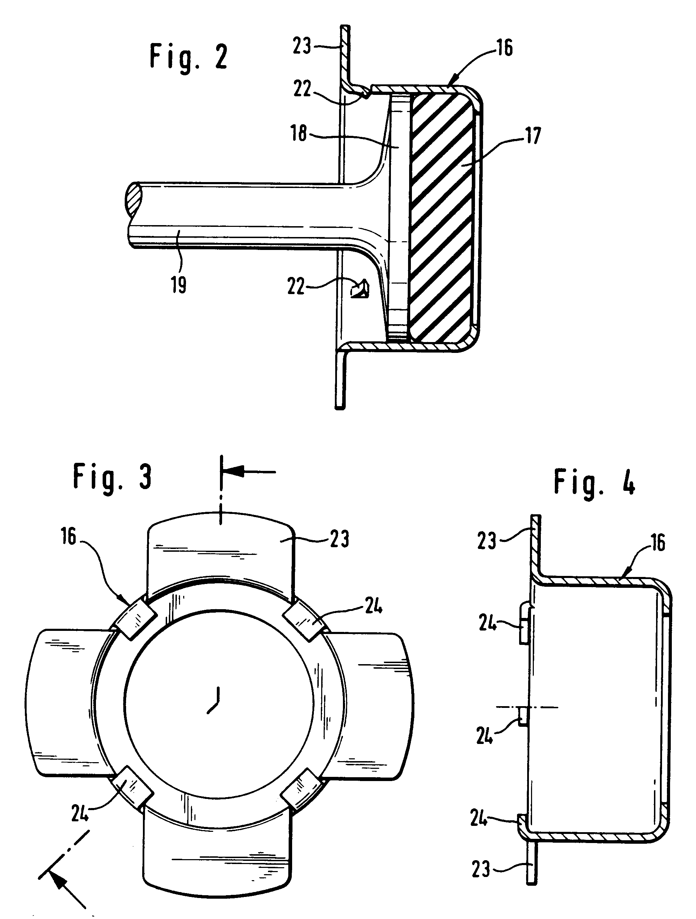

Fig. 2 zeigt im axialen Schnitt nur das Einlegeteil 16 mit der Reaktionsscheibe 17 und dem Kopfflansch 18 sowie die Druckstange 19. Zur Sicherung des Kopfflansches 18 sind am Einlegeteil 16 Einscherungen 22 angebracht. In dieser vergrößerten Darstellung erkennt man auch die Laschen 23, an denen sich die Rückstellfeder (20 in Fig. 1) abstützen kann.

Diese Laschen 23 sind in Fig. 3 in einer Draufsicht deutlich zu erkennen. Ebenso wie die nach innen ragenden Nasen 24, die als Haltesicherung für die Druckstange 19 dienen. Sowohl die Laschen 23 als auch die Nasen 24 weisen in Umfangsrichtung Unterbrechungen auf, um eine einwandfreie Punktion des Bremskraftverstärkers zu gewährleisten.

Dazu sind Verbindungskanäle zwischen den Vakuumkammern 4 und den Arbeitskammern 5 notwendig, die durch das Tellerventil 14 und die Ventilsitze 12, 13 geöffnet oder verschlossen werden.

Fig. 4 zeigt im Schnitt entlang der in Fig. 3 markierten Linie noch einmal dieselbe Ausführungsform der Erfindung. Man erkennt die an das Einlegeteil 16 angeformten Laschen 23 und die Nasen 24, die die Druckstange 19 am Herausfallen hindern.

## Patentansprüche

1. Bremskraftverstärker, insbesondere für Kraftfahrzeuge mit einem Verstärkergehäuse, das durch mindestens eine axial bewegliche Wand in mindestens eine Vakuumkammer und mindestens eine Arbeitskammer dichtend unterteilt ist, mit einer in der hauptzylinderseitigen Vakuumkammer angeordneten Rückstellfeder und mit einem mechanisch betätigbaren Steuerventil zur Verbindung der Arbeitskammer mit der Vakuumkammer bzw. mit der Atmosphäre, dessen Steuerventilgehäuse mit der beweglichen Wand fest verbunden ist, wobei eine gummielastische Reaktionsscheibe, die an einem Kopfflansch einer Druckstange anliegt, die Bremskraft auf einen Betätigungskolben eines unterdruckseitig am Verstärkergehäuse angebrachten Hauptzylinders überträgt, in einem topfförmigen Einlegeteil angeordnet ist, das sich in einer Ausnehmung des Steuerventilgehäuses befindet, dessen Wände sich hauptzylinderseitig über den Kopfflansch hinaus erstrecken und dessen Boden dem Steuerventilgehäuse zugewandt ist, dadurch **gekennzeichnet,** daß das Einlegeteil (16) mit formschlüssigen Haltevorrichtungen (21, 22, 24) versehen ist, die den Kopfflansch (18) gegen Herausfallen sichern und als Anlage für die Rückstellfeder (20) dient.

2. Bremskraftverstärker nach Anspruch 1, dadurch **gekennzeichnet,** daß an das Einlegeteil (16) mehrere, sich radial nach außen erstreckende Laschen (23) angeformt sind, die als Abstützfläche für die Rückstellfeder (20) dienen.

3. Bremskraftverstärker nach Anspruch 1 oder 2, dadurch **gekennzeichnet,** daß die Haltevorrichtungen durch mehrere sich radial nach innen erstreckende Nasen (24) gebildet sind.

4. Bremskraftverstärker nach Anspruch 1 oder 2, dadurch **gekennzeichnet,** daß die Haltevorrichtungen durch Eindrückungen (21) gebildet sind.

5. Bremskraftverstärker nach Anspruch 1 oder 2, dadurch **gekennzeichnet,** daß die Haltevorrichtungen durch Einscherungen (22) gebildet sind.

6. Bremskraftverstärker nach einem der vorhergehenden Ansprüche, dadurch **gekennzeichnet**, daß das Einlegeteil (16) ein Blechpreßteil ist.

## Claims

1. A brake power booster, in particular for automotive vehicles, comprising a booster housing which is sealingly subdivided by at least one axially movable wall into at least one vacuum chamber and at least one working chamber, comprising a resetting spring placed in the vacuum chamber on the master-cylinder side and a mechanically actuatable control valve to connect the working chamber to the vacuum chamber and/or to the atmosphere, the control valve housing thereof being rigidly coupled to the movable wall, wherein a rubber-elastic reaction plate, which abuts on a head flange of a push rod and which transmits the brake force onto an actuating piston of a master cylinder fitted to the booster housing on the vacuum side is arranged in a bowl-shaped insert member which latter is placed in a recess of the control valve housing whose walls extend beyond the head flange on the master-cylinder side and whose bottom is facing the control valve housing,
**characterised** in that the insert member (16) is provided with positively connected retaining means (21, 22, 24) serving to secure the head flange (18) against dropping out and as an abutment for the resetting spring (20).

2. A brake power booster as claimed in claim 1,
**characterised** in that shaped at the insert member (16) are several radially outwardly extending tongues (23) which serve as a supporting surface for the resetting spring (20).

3. A brake power booster as claimed in claim 1 or 2,
**characterised** in that the retaining means are formed by several radially inwardly extending noses (24).

4. A brake power booster as claimed in claim 1 or 2,
**characterised** in that the retaining means are indentations (21).

5. A brake power booster as claimed in claim 1 or 2,
**characterised** in that the retaining means are sheared-in depressions (22).

6. A brake power booster as claimed in any one of the preceding claims,
**characterised** in that the insert member (16) is a sheet-metal pressed piece.

## Revendications

1. Amplificateur d'effort de freinage, notamment pour véhicule automobile, comprenant un bottier d'amplificateur, divisé de manière étanche par au moins une paroi, mobile axialement, en au moins une chambre de dépression et au moins une chambre de travail, un ressort de rappel, disposé dans la chambre de dépression du côté du maître-cylindre, et une valve de commande qui est agencée de façon à pouvoir être actionnée par des aryens mécaniques et sert à faire communiquer la chambre de travail avec la chambre de dépression ou avec l'atmosphère et dont le bottier de valve de commande est relié de manière fixe à la paroi mobile, tandis qu'un disque de réaction, à élasticité du type de celle du caoutchouc, qui prend appui sur une tête, en forme de plateau, d'une tige de pression qui transmet la force de freinage à un piston d'actionnement d'un maître-cylindre disposé sur le bottier d'amplificateur du ôté de la dépression, est disposé dans une pièce insérée, en forme de cuvette, qui est située dans un logement du bottier de la valve de commande dont les parois s'étendent au delà de la tête en forme de plateau du côté du maître-cylindre et dont le fond fait face au bottier de la valve de commande, caractérisé en ce que la pièce insérée (16) est pourvue de moyens de maintien par complémentarité de formes (21, 22, 24) qui empêchent la tête en forme de plateau (18) de tomber et servent d'appui au ressort de rappel (20).

2. Amplificateur d'effort de freinage suivant la revendication 1, caractérisé en ce que, sur la pièce insérée (16), il est réalisé plusieurs pattes (23) s'étendant radialement vers l'extérieur et servant de surfaces d'appui pour le ressort de rappel (20).

3. Amplificateur d'effort de freinage suivant la revendication 1 ou 2, caractérisé en ce que les moyens de maintien sont constitués de plusieurs becs (24) s'étendant radialement vers l'intérieur.

4. Amplificateur d'effort de freinage suivant la revendication 1 ou 2, caractérisé en ce que les moyens de maintien sont constitués de parties repoussées (21).

5. Amplificateur d'effort de freinage suivant la revendication 1 ou 2, caractérisé en ce que les moyens de maintien sont constitués de crevés (22).

6. Amplificateur d'effort de freinage suivant l'une quelconque des revendications précédentes, caractérisé en ce que la pièce insérée (16) est une pièce emboutie en tôle.
